# EUROPEAN PATENT APPLICATION

(11) **EP 2 955 549 A1**
(43) Date of publication of application: **16.12.2015**
(21) Application number: 14749492.6
(22) Date of filing: 22.01.2014
(51) Int. Cl.: G02B 5/08, B32B 7/02, B32B 15/08, F24J 2/10, G02B 7/182

(54) **REFLECTING MIRROR FOR SOLAR LIGHT COLLECTION**

(30) Priority: 05.02.2013 JP 2013020621
(71) Applicant: FUJIFILM Corporation, Tokyo 106-8620 (JP)
(72) Inventor: UEKI Shiki, Ashigara-kami-gun Kanagawa 258-8577 (JP)
(74) Representative: Hoffmann Eitle
(86) International application number: PCT/JP2014/051226
(87) International publication number: WO 2014/122991

(57) **Abstract**

The purpose of the present invention is to provide a reflecting mirror for solar light collection having excellent scratch resistance as well as excellent ease of installation and release. This reflecting mirror for solar light collection has a resin substrate, a polygonal film mirror for solar light collection having a metal reflecting layer and a surface coating layer, and a frame-shaped support member for supporting a peripheral edge part of the film mirror.

## Description

### TECHNICAL FIELD

The present invention relates to a reflecting mirror for collecting solar radiation that uses a film mirror for collecting solar radiation.

### BACKGROUND ART

Glass mirrors have conventionally been used in solar radiation reflecting devices because they are exposed to ultraviolet rays and heat from solar radiation, wind and rain, dust, and the like.

However, when a glass mirror is used, there are issues associated with possible damage during transportation and with high construction cost since a frame on which the mirror is mounted requires high mechanical strength.

To solve such problems, substituting a resin reflective sheet (film mirror) for the glass mirror has been recently proposed.

For example, Patent Literature 1 describes a "reflecting mirror characterized in that a reflective film, formed by vapor deposition, sputtering, adhering, or the like of a metal thin film having high reflectivity such as Al, Ag, or the like on a plastic film, is mounted on a ring-shaped or disk-shaped member" (see claim (1) and the like).

### CITATION LIST

### PATENT LITERATURE

Patent Literature 1: JP 03-293301 A

### SUMMARY OF INVENTION

### TECHNICAL PROBLEMS

The present inventor studied the reflecting mirror described in Patent Literature 1 and found that scratch resistance against dust, mountability onto a mounting body during construction, and detachability from the mounting body during maintenance are not taken into consideration because the reflecting mirror is designed primarily for space applications, and the above characteristics are sometimes poor in other usage environments.

Therefore, the object of the present invention is to provide a reflecting mirror for solar radiation collection having excellent scratch resistance as well as excellent mountability and detachability.

### SOLUTION TO PROBLEMS

As a result of diligent research to attain the above object, the present inventor discovered that a reflecting mirror for solar radiation collection including a film mirror for solar radiation collection which has a prescribed shape and a prescribed layer structure and including a support member has excellent scratch resistance and also has excellent mountability on and detachability from a solar reflector body (solar radiation tracking system). The invention has been thus completed.

Specifically, the present invention provides (1) to (8) below.
(1) A reflecting mirror for solar radiation collection, comprising:
   a film mirror for solar radiation collection having a polygonal shape and including a resin substrate, a metallic reflective layer and a surface covering layer; and
   a support member having a frame shape and adapted to support a peripheral edge of the film mirror.
(2) The reflecting mirror for solar radiation collection according to (1), wherein the peripheral edge of the film mirror and the support member are bonded by an adhesive or a pressure-sensitive adhesive.
(3) The reflecting mirror for solar radiation collection according to (1) or (2), wherein a bonding region where the peripheral edge of the film mirror and the support member are bonded has at least two through-holes utilized in joining with a mounting body.
(4) The reflecting mirror for solar radiation collection according to any one of (1) to (3), wherein the film mirror has a film thickness of not less than 100 µm.
(5) The reflecting mirror for solar radiation collection according to any one of (1) to (4), wherein the film mirror has a film thickness of not less than 150 µm but not greater than 1000 µm.
(6) The reflecting mirror for solar radiation collection according to any one of (1) to (5), wherein the film mirror has a rectangular shape.
(7) The reflecting mirror for solar radiation collection according to any one of (1) to (6), wherein the film mirror has a first surface covering layer, a first metallic reflective layer, a resin substrate, a second metallic reflective layer and a second surface covering layer in this order.
(8) The reflecting mirror for solar radiation collection according to any one of (1) to (6), wherein the film mirror has a first surface covering layer, a first resin substrate, a metallic reflective layer, a second resin substrate and a second surface covering layer in this order.

### ADVANTAGEOUS EFFECTS OF INVENTION

As will be described below, according to the present invention, a reflecting mirror for solar radiation collection having excellent scratch resistance as well as excellent mountability and detachability can be provided.

### BRIEF DESCRIPTION OF DRAWINGS

[FIG. 1] FIG. 1 is an oblique view schematically illustrating an example of a preferred embodiment of a reflecting mirror for solar radiation collection of the present invention, using an exploded view and a final view.
[FIG. 2] FIG. 2 is an oblique view schematically illustrating another example of the preferred embodiment of the reflecting mirror for solar radiation collection of the present invention, using an exploded view and a final view.
[FIG. 3] FIG. 3 is a section view schematically illustrating an example of a preferred embodiment (first embodiment) of a film mirror for solar radiation collection used in the present invention.
[FIG. 4] FIG. 4 is a section view schematically illustrating another example of the preferred embodiment (first embodiment) of the film mirror for solar radiation collection used in the present invention.
[FIG. 5] FIG. 5 is a section view schematically illustrating an example of a preferred embodiment (second embodiment) of a film mirror for solar radiation collection used in the present invention.
[FIG. 6] FIG. 6 is a section view schematically illustrating another example of the preferred embodiment (second embodiment) of the film mirror for solar radiation collection used in the present invention.
[FIGS. 7] FIG. 7(A) is an example of a schematic section view taken along section line A-A in FIG. 2, and FIGS. 7(B) to 7(D) are other examples of schematic section views of a support member.

### DESCRIPTION OF EMBODIMENTS

### [Reflecting mirror for solar radiation collection]

The reflecting mirror for solar radiation collection of the present invention (abbreviated as "reflecting mirror of the present invention" hereinafter) comprises a polygonal film mirror for solar radiation collection (abbreviated as "film mirror" hereinafter) having a resin substrate, a metallic reflective layer, and a surface covering layer, and a frame-shaped support member which supports a peripheral edge of the film mirror.

Here, the peripheral edge of the film mirror refers to the portion supported by the support member. The width of the peripheral edge is not particularly limited because it varies depending on the width of the support member, but, for example, in the case of a rectangular (square or oblong) film mirror, the width is preferably from about 1/2 to about 1/100 of the length of a side (the long side if oblong) of the film mirror.

The reflecting mirror of the present invention having such a configuration enhances mountability during construction and detachability during maintenance, because the reflecting mirror can be mounted with only the support member contacting a mounting body and the film mirror not contacting the mounting body.

Furthermore, in the reflecting mirror of the present invention, since the film mirror contains the surface covering layer, scratch resistance against dust is improved.

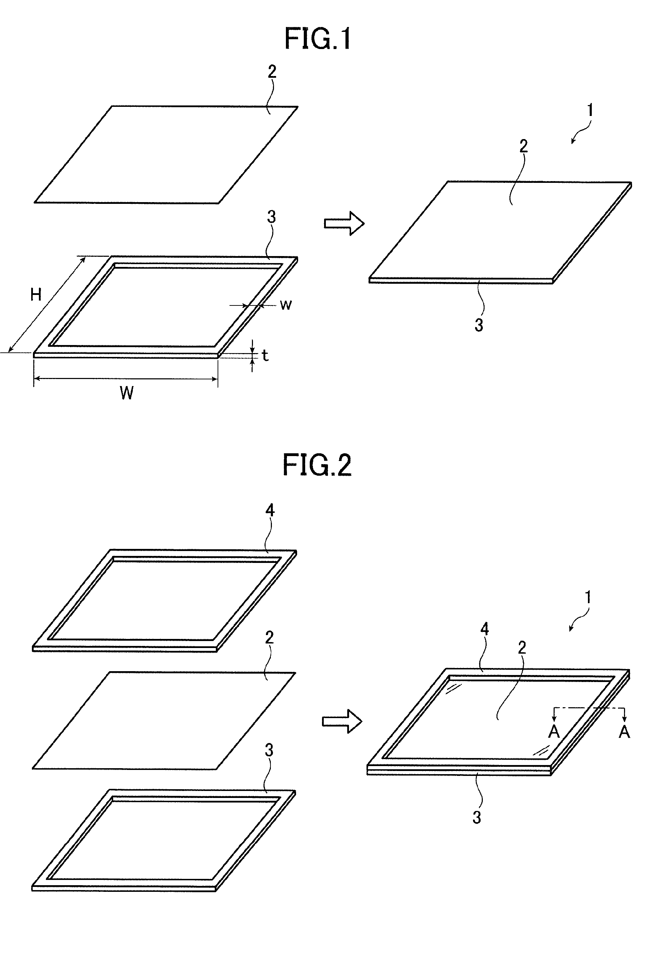

The reflecting mirror of the present invention will be described below using FIGS. 1 and 2.

Here, FIG. 1 and FIG. 2 are oblique views schematically illustrating examples of a preferred embodiment of the reflecting mirror of the present invention, each using an exploded view and a final view, but the reflecting mirror of the present invention is not particularly limited to these drawings.

As illustrated in FIG. 1, a reflecting mirror 1 has a film mirror 2 and a frame-shaped support member 3 which supports the peripheral edge of one face of the film mirror 2.

Furthermore, because both faces of the film mirror 2 can be used by reversing the reflecting mirror 1 relative to the mounting body (not illustrated), the reflecting mirror 1 preferably has the film mirror 2 and the support member 3 and a support member 4 which have a frame shape and support the peripheral edges of both faces of the film mirror 2, as illustrated in FIG. 2.

In the present invention, a method for bonding the peripheral edge of the film mirror and the support member is not particularly limited, and may be, for example, an adhesion method using an adhesive or a pressure-sensitive adhesive, a method for fixing the two using clips, and the like.

Furthermore, in the present invention it is preferred that a bonding region where the peripheral edge of the film mirror and the support member(s) are bonded has at least two through-holes which are used in joining with the mounting body.

By using such through-holes, the support member(s) and the mounting body can be easily anchored using screws, bolts, or the like.

### [Film mirror]

The film mirror in the reflecting mirror of the present invention is a polygonal film mirror having a resin substrate, a metallic reflective layer, and a surface covering layer, as described above.

In the present invention, the film thickness of the film mirror is preferably not less than 100 µm, more preferably not less than 150 µm but not greater than 1000 µm, and even more preferably not less than 200 µm but not greater than 600 µm, because tension adjustment of the film mirror is easy when the peripheral edge is bonded to the support member to be described later to be supported thereby and also because the specular reflectivity improves and the temperature cycle is good.

Furthermore, in the present invention, the shape of the film mirror is not particularly limited provided that it is polygonal, but a polygon having not less than four sides is preferred. Since it is easier to provide and adjust film mirror tension when the support member to be described later supports the peripheral edge, a rectangle is more preferred.

The size of the film mirror is not particularly limited because it can be designed as appropriate according to the shape thereof, the mounting body, and the like. For example, as to the size of a rectangular film mirror (longitudinal width and lateral width), it is preferable from the viewpoint of tension adjustment that the longitudinal width (long side) is from 100 to 5000 mm, the lateral width (short side) is from 100 to 2000 mm, and the ratio between the longitudinal width and the lateral width (longitudinal width/lateral width) is 1/1 to 15/1.

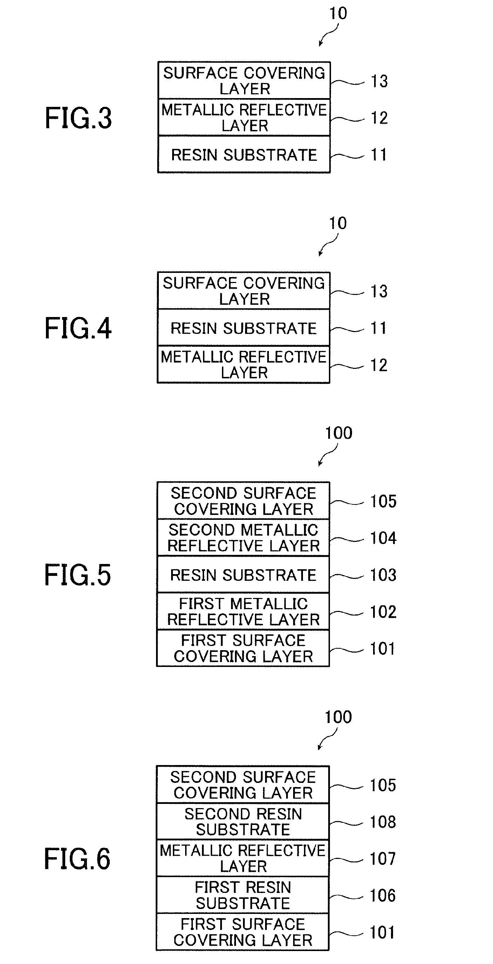

The layer structure of the film mirror will be described in detail below using FIGS. 3 to 6.

Here, FIGS. 3 to 6 are section views schematically illustrating examples of preferred embodiments of the film mirror included in the reflecting mirror of the present invention. The layer structure of the film mirror is not particularly limited to these drawings, and if necessary, a primer layer or an adhesive layer may be provided between adjacent layers, or a back coat layer may be provided at the side facing the mounting body, for example.

<First embodiment: FIGS. 3 and 4>

Examples of a first embodiment of the film mirror (single side use type) include an embodiment as illustrated in FIG. 3 in which a film mirror 10 has a resin substrate 11, a metallic reflective layer 12, and a surface covering layer 13 in this order from the side to face the mounting body (not illustrated), and an embodiment as illustrated in FIG. 4 in which a film mirror 10 has the metallic reflective layer 12, the resin substrate 11, and the surface covering layer 13 in this order from the side to face the mounting body (not illustrated).

Note that in the embodiment illustrated in FIG. 4, a covering layer which protects the metallic reflective layer may be provided on the surface of the metallic reflective layer 12 that is opposite from the side to face the resin substrate 11.

### <Second embodiment: FIGS. 5 and 6>

Examples of a second embodiment of the film mirror (double side use type) include an embodiment as illustrated in FIG. 5 in which a film mirror 100 has a first surface covering layer 101, a first metallic reflective layer 102, a resin substrate 103, a second metallic reflective layer 104, and a second surface covering layer 105 in this order from the side to face the mounting body (not illustrated), and an embodiment as illustrated in FIG. 6 in which a film mirror 100 has the first surface covering layer 101, a first resin substrate 106, a metallic reflective layer 107, a second resin substrate 108, and the second surface covering layer 105 in this order from the side to face the mounting body (not illustrated).

This second embodiment is preferred because scratch resistance is more improved while excellent mountability and detachability of the reflecting mirror of the present invention are maintained.

Furthermore, in this second embodiment, an embodiment in which the peripheral edges of both faces of the film mirror are supported by the support members (refer to FIG. 2) is more preferred because both faces of the film mirror can be used by reversing the reflecting mirror relative to the mounting body.

### (Resin substrate)

The resin substrate (including the first resin substrate and the second resin substrate; the same applying in the rest) is not particularly limited, and examples of the constituent material thereof include polyolefin resins such as polyethylene and polypropylene; polyester resins such as polyethylene terephthalate and polyethylene naphthalate; polycarbonate resins; acrylic resins such as polymethyl methacrylate; polyamide resins, polyimide resins; polyvinyl chloride resins; polyphenylene sulfide resins; polyether sulfone resins; polyethylene sulfide resins; polyphenylene ether resins; styrene resins; cellulose resins such as cellulose acetate; and so forth. The constituent materials of the first resin substrate and the second resin substrate used in the second embodiment (FIG. 6) may be the same or different materials.

Among these, polyester resins or acrylic resins are preferred from the perspectives of reflectance and weather resistance of the resultant film mirror.

The shape of the resin substrate is not limited to a planar shape, and may be, for example, any of concave, convex and other shapes.

The thickness of the resin substrate is not particularly limited because it varies depending on the shape thereof, but when the resin substrate is planar, a thickness of from 25 to 300 µm is usually preferred.

### (Metallic reflective layer)

The metallic reflective layer (including the first metallic reflective layer and the second metallic reflective layer; the same applying in the rest) is not particularly limited, and examples of the constituent material (metal) thereof include Au, Ag, Cu, Pt, Pd, In, Ga, Sn, Ge, Sb, Pb, Zn, Bi, Fe, Ni, Co, Mn, Tl, Cr, V, Ru, Rh, Ir, Al, and the like. The constituent materials of the first metallic reflective layer and the second metallic reflective layer used in the second embodiment (FIG. 5) may be the same or different materials.

Among these, Ag, Al, Ni, or Cu is preferred and Ag is more preferred from the perspectives of reflectance and weather resistance of the resultant film mirror.

Furthermore, when the metal that constitutes the metallic reflective layer is Ag, the content of Ag in the metallic reflective layer is preferably not less than 30 mol%, more preferably not less than 50 mol%, even more preferably not less than 80 mol%, particularly preferably not less than 95 mol%, and most preferably 100 mol% relative to all metals constituting the metallic reflective layer.

The metallic reflective layer is not particularly limited for shape and may be a layer that covers all or part of the main face of the resin substrate.

The thickness of the metallic reflective layer is not particularly limited, but from the perspectives of reflectance and the like of the film mirror, it is preferably from 50 to 500 nm, and more preferably from 70 to 300 nm.

A method of forming the metallic reflective layer is not particularly limited, and either a wet method or a dry method may be employed.

Examples of wet methods include known methods such as so-called metal plating methods (electroless plating or electroplating), and a method of applying a solution containing a metal complex compound.

Examples of dry methods include vacuum evaporation, sputtering, ion plating, and the like.

An example of a preferred embodiment of a metallic reflective layer formation method in the present invention is a method in which (i) a primer layer is formed on the resin substrate, (ii) a plating catalyst or a precursor thereof is applied to the formed primer layer, (iii) plating is performed on the primer layer to which the plating catalyst or the precursor thereof has been applied.

Each of the above steps (i) to (iii) will be described in detail below.

### (Step (i): Primer layer formation step)

Step (i) is a step in which a primer layer is formed on a resin substrate.

The primer layer is a layer disposed between the resin substrate and the metallic reflective layer and serving to increase the adhesion therebetween.

The primer layer is obtained by performing at least one of heat treatment and photoirradiation treatment (also referred to as "energy application" hereinafter) on a layer containing a polymer having a functional group that interacts with a plating catalyst or a precursor thereof and a polymerizable group.

First, the polymer used will be described in detail, and then the procedure of Step (i) will be described in detail.

The polymer used in the primer layer contains a functional group that interacts with a plating catalyst or a precursor thereof (also referred to as "interactive group" hereinafter) and a polymerizable group. The interactive group is a group that interacts with a plating catalyst or a precursor thereof, and has the role of increasing adhesion between the metallic reflective layer and the primer layer. In response to at least one of heat treatment and photoirradiation treatment to be described later, the polymerizable group undergoes cross-linking reaction to thereby increase the strength of the primer layer while a part of the polymerizable group reacts with the resin substrate to thereby increase adhesion between the resin substrate and the primer layer.

The polymerizable group is not limited as long as it is a functional group that can form, upon energy application, chemical bonds among polymers or between a polymer and the resin substrate. Examples of the polymerizable group include radical-polymerizable groups, cationic-polymerizable groups, and the like. Of these, radical-polymerizable groups are preferred from the perspective of reactivity.

Examples of the radical-polymerizable groups include a methacryloyl group, an acryloyl group, an itaconate group, a crotonate group, an isocrotonate group, a maleate group, a styryl group, a vinyl group, an acrylamide group, a methacrylamide group, and the like. Among these, a methacryloyl group, an acryloyl group, a vinyl group, a styryl group, an acrylamide group, and a methacrylamide group are preferred. Even among these, a methacryloyl group, an acryloyl group, an acrylamide group, and a methacrylamide group are more preferred from the perspectives of radical polymerization reactivity and flexibility in synthesis, and an acrylamide group and a methacrylamide group are even more preferred from the perspective of alkali resistance.

The type of interactive group is not particularly limited provided that it is a group that interacts with a plating catalyst or a precursor thereof, and examples thereof include nitrogen-containing functional groups such as an amino group, an amide group, an imide group, a urea group, a tertiary amino group, an ammonium group, an amidine group, a triazine ring, a triazole ring, a benzotriazole group, an imidazole group, a benzimidazole group, a quinoline group, a pyridine group, a pyrimidine group, a pyrazine group, a quinazoline group, a quinoxaline group, a purine group, a triazine group, a piperidine group, a piperazine group, a pyrrolidine group, a pyrazole group, an aniline group, groups containing an alkylamine structure, groups containing an isocyanuric structure, a nitro group, a nitroso group, an azo group, a diazo group, an azido group, a cyano group, a cyanate group (R-O-CN), and the like; oxygen-containing functional groups such as an ether group, a hydroxy group, a phenolic hydroxy group, a carboxyl group, a carbonate group, a carbonyl group, an ester group, groups containing an N-oxide structure, groups containing an S-oxide structure, groups containing an N-hydroxy structure, and the like; sulfur-containing functional groups such as a thiophene group, a thiol group, a thiourea group, a thiocyanuric group, a benzothiazole group, a mercaptotriazine group, a thioether group, a thioxy group, a sulfoxide group, a sulfone group, a sulfite group, groups containing a sulfoximine structure, groups containing a sulfonate structure, a sulfonate group, groups containing a sulfonic acid ester structure, and the like; phosphorus-containing functional groups such as a phosphate group, a phosphoroamide group, a phosphine group, groups containing a phosphoric acid ester structure, and the like; and groups containing a halogen atom such as chlorine or bromine or the like, as well as salts thereof in the case where a functional group can take on a salt structure.

Among these, ionic polar groups such as a carboxyl group, a sulfonate group, a phosphate group, and a boronic acid group, and nondissociative functional groups such as an ether group or a cyano group are more preferred due to their high polarity and high adsorption ability.

From the perspectives of ease of polymer synthesis and adhesion between the resin substrate and the metallic reflective layer, the polymer preferably contains a unit (repeating unit) represented by formula (1) below and a unit represented by formula (2) below.

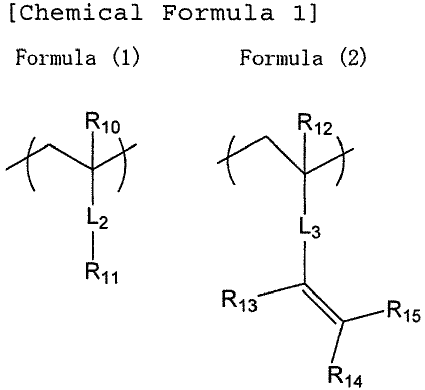

In formula (1), R₁₀ denotes a hydrogen atom or an alkyl group (for example, a methyl group, an ethyl group, or the like).

In formula (1), L₂ denotes a single bond or a divalent linking group. Examples of the divalent linking group include optionally substituted divalent aliphatic hydrocarbon groups (preferably having from 1 to 8 carbons; for example, alkylene groups such as a methylene group, an ethylene group, or a propylene group), optionally substituted divalent aromatic hydrocarbon groups (preferably having from 6 to 12 carbons; for example, a phenylene group), and -O-, -S-, -SO₂-, -N(R)- (wherein R is an alkyl group), -CO-, -NH-, -COO-, - CONH-, or a group in which these are combined (for example, an alkyleneoxy group, an alkyleneoxycarbonyl group, an alkylenecarbonyloxy group, and the like), and the like.

In formula (1), R₁₁ denotes an interactive group. The definition, specific examples, and preferred embodiments of the interactive group are as described above.

Furthermore, the polymer may contain two or more kinds of units represented by formula (1) having different interactive groups denoted by R₁₁. For example, a unit represented by formula (1) in which R₁₁ is an ionic polar group and a unit represented by formula (1) in which R₁₁ is a nondissociative group may be contained in the polymer.

In formula (2), R₁₂ to R₁₅ denote, each independently, a hydrogen atom or an optionally substituted alkyl group.

When R₁₂ to R₁₅ are optionally substituted alkyl groups, alkyl groups having from 1 to 6 carbons are preferred, and alkyl groups having from 1 to 4 carbons are more preferred. More specifically, examples of unsubstituted alkyl groups include a methyl group, an ethyl group, a propyl group, and a butyl group. Examples of substituted alkyl groups include a methyl group, an ethyl group, a propyl group, and a butyl group substituted with a methoxy group, a hydroxy group, a halogen atom (for example, a chlorine atom, a bromine atom, or a fluorine atom) or the like.

Furthermore, as R₁₂, a hydrogen atom, a methyl group, or a methyl group substituted with a hydroxy group or a bromine atom is preferred. As R₁₃, a hydrogen atom, a methyl group, or a methyl group substituted with a hydroxy group or a bromine atom is preferred. As R₁₄, a hydrogen atom is preferred. As R₁₅, a hydrogen atom is preferred.

In formula (2), L₃ denotes a single bond or a divalent linking group. Specific examples and preferred embodiments of the divalent linking group are the same as those of L₂ in formula (1).

The most preferred ranges of the polymer include a copolymer containing a unit represented by formula (A) below, a unit represented by formula (B) below and a unit represented by formula (C) below, a copolymer containing a unit represented by formula (A) below and a unit represented by formula (B) below, and a copolymer containing a unit represented by formula (A) below and a unit represented by formula (C) below.

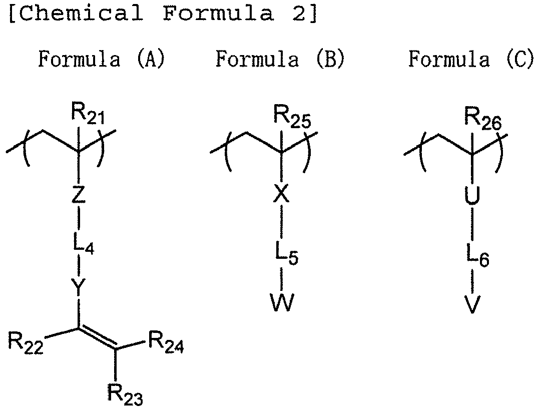

In the above formulas (A) to (C), R₂₁ to R₂₆ denote, each independently, a hydrogen atom or an optionally substituted alkyl group having from 1 to 4 carbons. X, Y, Z, and U denote, each independently, a single bond or a divalent linking group. L₄, Ls, and L₆ denote, each independently, a single bond or a divalent linking group. W denotes an interactive group consisting of a nondissociative functional group. V denotes an interactive group consisting of an ionic polar group. Specific examples and preferred embodiments of the divalent linking group are the same as those of L₂ in formula (1).

In the unit represented by formula (A), Y and Z are preferably, each independently, an ester group, an amide group, or a phenylene group (-C₆H₄-). L₄ is preferably an optionally substituted divalent organic group (especially a hydrocarbon group) having from 1 to 10 carbons.

In the unit represented by formula (B), W is preferably a cyano group or an ether group. X and L₅ are both preferably single bonds.

For the unit represented by formula (C), V is preferably a carboxylic acid group, an embodiment in which V is a carboxylic acid group and L₆ contains a ring structure having from 4 to 8 members at a portion linked to V is preferred, and an embodiment in which V is a carboxylic acid group and the chain length of L₆ is from 6 to 18 atoms is also preferred. In addition, for the unit represented by formula (C), an embodiment in which V is a carboxylic acid group and U and L₆ are single bonds is also preferred. Among these, an embodiment in which V is a carboxylic acid group and U and L₆ are both single bonds is most preferred.

The contents of units represented by formulas (A) to (C) are preferably in the following ranges.

Specifically, in the case of the copolymer containing a unit represented by formula (A), a unit represented by formula (B) and a unit represented by formula (C), the ratio of unit represented by formula (A) : unit represented by formula (B) : unit represented by formula (C) is preferably from 5 to 50 mol% : from 5 to 40 mol% : from 20 to 70 mol%, and more preferably from 10 to 40 mol% : from 10 to 35 mol% : from 20 to 60 mol%.

In the case of the copolymer containing a unit represented by formula (A) and a unit represented by formula (B), the ratio of unit represented by formula (A) : unit represented by formula (B) is preferably from 5 to 50 mol% : from 50 to 95 mol%, and more preferably from 10 to 40 mol% : from 60 to 90 mol%.

In the case of the copolymer containing a unit represented by formula (A) and a unit represented by formula (C), the ratio of unit represented by formula (A) : unit represented by formula (C) is preferably from 5 to 50 mol% : from 50 to 95 mol%, and more preferably from 10 to 40 mol% : from 60 to 90 mol%.

In these ranges, the improvement in polymerization of the polymer by heat treatment or photoirradiation treatment, the decrease in resistance of the primer layer, the improvement in moisture-resistant adhesion, and the like are achieved.

The method of forming a layer containing the above polymer is not particularly limited, and a known method may be employed. One example is a method in which a composition for forming the layer containing the above polymer is applied to the resin substrate, and then dried as necessary to form the layer.

At least one of heat treatment and photoirradiation treatment is performed on the layer containing the polymer. The layer containing the polymer may be subjected to one or both of heat treatment and photoirradiation treatment. When both treatments are performed, they may be performed in separate steps or simultaneously.

By performing these treatments, the polymerizable groups are activated, reactions of the polymerizable groups with each other and between the polymerizable group and the resin substrate proceed, and the primer layer adhered on the resin substrate is formed.

The optimal heat treatment conditions are selected according to the type of polymer used, but it is preferable that treatment be performed at a temperature of from 60 to 150°C (more preferably from 80 to 120°C) for from 0.1 to 3 hours (more preferably from 0.5 to 2 hours) from the perspectives that crosslink density of the primer layer is increased and weather resistance and flexibility of the film mirror are improved.

The optimal photoirradiation treatment conditions are selected according to the type of polymer used, but it is preferable that the exposure quantity be from 10 to 8000 mJ/cm², and preferably from 100 to 3000 mJ/cm², from the perspectives that crosslink density of the primer layer is increased and weather resistance and flexibility of the film mirror are improved. The exposure wavelength is preferably from 200 to 300 nm.

The light source used in exposure is not particularly limited, and may be, for example, a mercury lamp, a metal halide lamp, a xenon lamp, a chemical lamp, a carbon arc lamp, or the like. Exemplary radioactive rays include an electron beam, an X-ray, an ion beam, a far-infrared ray, and the like.

An unreacted polymer may be removed from the composition after heat treatment or photoirradiation treatment as appropriate. Examples of the removal method include methods using solvents. Examples of solvents include a solvent that dissolves a polymer, and, in the case of an alkali-soluble polymer, alkali-based developing solutions (sodium carbonate, sodium hydrogen carbonate, ammonia water, sodium hydroxide aqueous solution) and the like may be used for removal.

The thickness of the primer layer is not particularly limited but is preferably from 0.05 to 10 µm, and more preferably from 0.3 to 5 µm, because weather resistance and flexibility of the film mirror are excellent.

### (Step (ii): Catalyst provision step)

The catalyst provision step is a step in which a plating catalyst or a precursor thereof is provided to the primer layer. In this step, the interactive group in the primer layer adsorbs the plating catalyst or the precursor thereof. For example, when a metal ion is used as the plating catalyst precursor, the primer layer adsorbs the metal ion.

Examples of the plating catalyst or the precursor thereof are those that function as catalysts or electrodes in plating in "Step (iii): Plating step" to be described below. Therefore, the plating catalyst or the precursor thereof is determined depending on the type of plating in the plating step.

The plating catalyst (for example, an electroless plating catalyst) or the precursor thereof used will be described in detail below.

As an electroless plating catalyst, one that can become an active nucleus during electroless plating is preferred and examples thereof include metals having catalytic ability in an auto-catalytic reduction reaction (metals known as being capable of electroless plating and having an ionization tendency lower than that of Ni), specifically Pd, Ag, Cu, Ni, Al, Fe, Co, and the like. Among these, Pd or Ag is preferred due to high catalytic ability.

As an electroless plating catalyst precursor, one that can become an electroless plating catalyst by chemical reaction is preferred. For example, a metal ion of a metal cited above as an electroless plating catalyst may be used. The metal ion that is the electroless plating catalyst precursor becomes by a reduction reaction a zero-valent metal which is an electroless plating catalyst. An electroless plating catalyst may be formed by providing the metal ion that is an electroless plating catalyst precursor to the primer layer and then independently changing the metal ion to a zero-valent metal by a reduction reaction prior to the immersion into the electroless plating bath, or the metal ion may be immersed as the electroless plating catalyst precursor into an electroless plating bath to allow the metal ion to be changed to a metal (electroless plating catalyst) using a reducing agent in the electroless plating bath.

The metal ion that is the electroless plating catalyst precursor is preferably provided to the primer layer using a metal salt. The metal salt used is not particularly limited provided that it is dissociated into a metal ion and a base (anion) when dissolved in an appropriate solvent, and examples thereof include M(NO₃)ₙ, MClₙ, M_{2/n}(SO₄), M_{3/n}(PO₄)Pd(OAc)ₙ (where M denotes a metal atom of valence n), and the like. As the metal ion, one obtained by dissociating the above metal salts may be advantageously used. Specific examples of the metal ion include Ag ion, Cu ion, Al ion, Ni ion, Co ion, Fe ion, and Pd ion. Among these, one capable of multidentate coordination is preferred, and Ag ion, Cu ion, and Pd ion are particularly preferred due to the number of types of coordinatable functional groups and catalytic ability.

In the case of reducing the electroless plating catalyst precursor prior to the plating step, the reduction step may be performed as a separate step prior to electroless plating by preparing a catalyst activating solution (reducing solution). The catalyst activating solution often contains a reducing agent that can reduce the electroless plating catalyst precursor (primarily a metal ion) to a zero-valent metal, and a pH adjusting agent for activating the reducing agent.

The concentration of the reducing agent relative to the total solution is preferably from 0.1 to 10 wt%.

Boron-based reducing agents such as sodium borohydride and dimethylamine borane and reducing agents such as formaldehyde and hypophosphorous acid may be used as the reducing agent.

In particular, reduction is performed preferably with an alkaline aqueous solution containing formaldehyde.

A catalyst used for performing electroplating without performing electroless plating may be used as the plating catalyst. Examples of such catalysts include zero-valent metals, and more specifically, Pd, Ag, Cu, Ni, Al, Fe, Co, and the like. Among these, those capable of multidentate coordination are preferred, and Pd, Ag, and Cu are particularly preferred due to their high adsorption (attachment) properties with respect to interactive groups and high catalytic ability.

As a method of providing the plating catalyst or the precursor thereof to the primer layer, a solution containing the plating catalyst or the precursor thereof (for example, a dispersion in which a metal is dispersed in an appropriate dispersion medium, or a solution containing a dissociated metal ion prepared by dissolving a metal salt in an appropriate solvent) is prepared, then the dispersion or the solution is applied to the primer layer, or the resin substrate on which the primer layer has been formed is immersed in the dispersion or the solution.

### (Step (iii): Plating step)

The plating step is a step in which the metallic reflective layer is formed by plating on the primer layer to which the metal catalyst or the precursor thereof has been provided.

The type of plating performed in this step may be electroless plating or electroplating, and can be selected as appropriate depending on the function of the plating catalyst or the precursor thereof provided to the primer layer in the catalyst provision step above. In short, in this step, either of electroplating or electroless plating may be performed on the primer layer to which the plating catalyst or precursor thereof has been provided.

A plating process that is advantageously performed in this step will be described below.

Electroless plating refers to an operation of depositing a metal by a chemical reaction using a solution in which a metal ion of metal to be deposited for plating is dissolved.

Electroless plating is performed by, for example, cleaning a resin substrate having a primer layer to which an electroless plating catalyst has been provided using water to remove an excess electroplating catalyst (metal), and then immersing the resin substrate in an electroless plating bath. A known electroless plating bath may be used as the electroless plating bath.

Furthermore, in the case where a resin substrate having a primer layer to which an electroless plating catalyst precursor has been provided is immersed in an electroless plating bath in the state where the primer layer is adsorbed or impregnated with the electroless plating catalyst precursor, it is preferred that the substrate be cleaned to remove an excess precursor (metal salt or the like) and then immersed in the electroless plating bath. In this case, reduction of the plating catalyst precursor and subsequent electroless plating are performed in the electroless plating bath. Similarly to the above, a known electroless plating bath may be used as the electroless plating bath.

In this step, when the provided plating catalyst or the precursor thereof has the function of an electrode, electroplating can be performed on the primer layer to which the plating catalyst or the precursor thereof has been provided.

A conventional method known in the art may be used as the electroplating method in the present invention. Examples of the metal used in electroplating in this step include copper, chromium, lead, nickel, gold, silver, tin, zinc, and the like, and silver is preferred because it further improves the reflectance of the resultant film mirror.

In addition, after the electroless plating described above, electroplating may be further performed using the formed plating film as an electrode.

Examples of silver compounds used in plating include silver nitrate, silver acetate, silver sulfate, silver carbonate, silver methanesulfonate, ammoniacal silver, silver cyanide, silver thiocyanate, silver chloride, silver bromide, silver chromate, silver chloranilate, silver salicylate, silver diethyldithiocarbamate, diethyldithiocarbamic acid silver salt, and silver p-toluenesulfonate. Among these, silver methanesulfonate is preferred because it further improves the reflectance of the resultant film mirror.

### (Surface covering layer)

The surface covering layer (including the first surface covering layer and the second surface covering layer; the same applying in the rest) is not particularly limited, and the constituent material thereof is not limited as long as it has transparency capable of transmitting light. Examples of the constituent material include resin, glass, ceramic, and the like, among which resin is preferred due to its excellent flexibility.

Examples of the resin include photocurable resins such as urethane (meth)acrylate resin, polyester (meth)acrylate resin, silicone (meth)acrylate resin, and epoxy (meth)acrylate resin; heat-curable resins such as phenol resin, urea resin, phenoxy resin, silicone resin, polyimide resin, diallyl phthalate resin, furan resin, bismaleimide resin, and cyanate resin; thermoplastic resins such as phenoxy resin, polyether sulfone, polysulfone, and polyphenylene sulfone; and the like. The constituent materials of the first surface covering layer and the second surface covering layer used in the second embodiment may be the same or different materials.

The thickness of the surface covering layer is not particularly limited but is preferably from 10 to 200 µm, and more preferably from 25 to 100 µm, because weather resistance and flexibility of the film mirror are more excellent.

The method of forming the surface covering layer is not particularly limited, and examples thereof include a method in which a predetermined resin substrate is adhered to the metallic reflective layer, and a method in which a curable composition containing the photocurable resin or the heat-curable resin described above is applied to the metallic reflective layer and then photocured by ultraviolet irradiation or heat-cured by heat.

### (Primer layer)

The constituent material of the optional primer layer is not particularly limited provided that it can improve adhesion between layers, and specific examples thereof include resin materials such as polyester resin, urethane resin, acrylic resin, urethane acrylic resin, polyamide resin, cycloolefin polymer resin, and the like.

The thickness of the primer layer is not particularly limited, but is preferably from 0.1 to 50 µm, and more preferably from 1 to 30 µm.

The method of forming the primer layer is not particularly limited. For example, in the case where urethane acrylic resin is used for the primer layer, there may be employed a method in which a mixed solution of urethane acrylate (for example, Ebecryl 8402, manufactured by Daicel-Cytec Co., Ltd.) and a photopolymerization initiator (for example, Irgacure 184, manufactured by Ciba Specialty Chemicals) is applied to the surface of the resin substrate, and then photocured by ultraviolet irradiation.

### (Adhesive layer)

The constituent material of the optional adhesive layer is not particularly limited provided that it has satisfactory adhesion and smoothness, and specific examples thereof include polyester resin, acrylate resin, melamine resin, epoxy resin, polyamide resin, vinyl chloride resin, vinyl chloride-vinyl acetate copolymer resin, and the like. One of these may be used alone, or two or more may be used together.

The thickness of the adhesive layer is not particularly limited, but is preferably from 0.01 to 5 µm, and more preferably from 0.1 to 2 µm, from the perspectives of adhesion, smoothness, reflectance, and the like.

The method of forming the adhesive layer is not particularly limited. For example, a conventional known coating method such as gravure coating, reverse coating, die coating, a blade coater, a roll coater, an air knife coater, a screen coater, a bar coater, a curtain coater, or the like may be used.

### (Back coat layer)

The material for forming the optional back coat layer is not particularly limited, and examples thereof include urethane resin, the resins contained in the surface covering layer described above, and the like.

The thickness of the back coat layer is not particularly limited, but is preferably from 0.5 to 50 µm, and more preferably from 1 to 30 µm.

The method of forming the back coat layer is not particularly limited. For example, in the case where the photocurable resin or the heat-curable resin described above is used for the back coat layer, there may be employed a method in which a curable composition containing any of these resins is applied to the back face of the resin substrate and then photocured by ultraviolet irradiation or heat-cured by heat.

### [Support member]

The support member in the reflecting mirror of the present invention is a frame-shaped support member supporting a peripheral edge of the film mirror described above.

Here, the shape of the support member is a frame shape that runs along the peripheral edge of the polygonal film mirror, but its cross-sectional shape is not particularly limited.

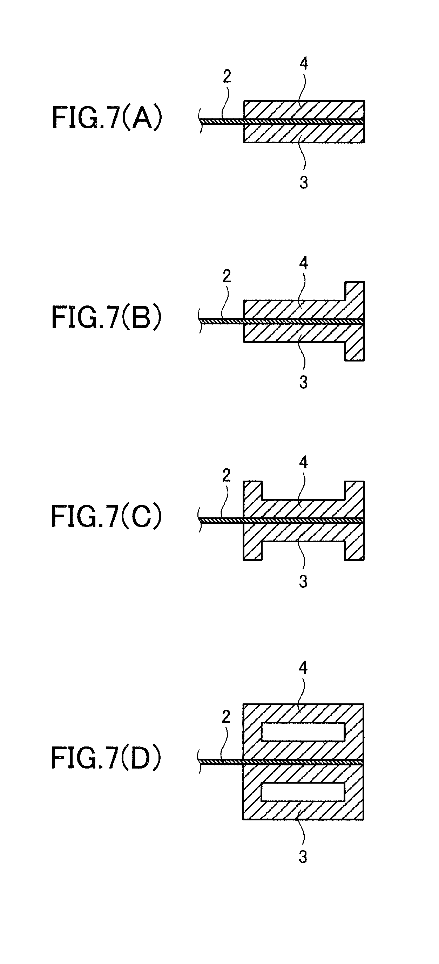

The cross-sectional shape of the support member will be described in detail below using FIGS. 7(A) to 7(D). FIGS. 7 schematically illustrate examples of a section view taken along section line A-A in FIG. 2, but when the reflecting mirror of the present invention is according to the embodiment illustrated in FIG. 1, support members 4 in FIGS. 7 are not present.

As illustrated in FIGS. 7(A) to 7(D), the faces of the support members 3 and 4 that make contact with the peripheral edge of the film mirror 2 are preferably planar in cross-section.

Furthermore, as illustrated in FIGS. 7(B) to 7(D), the faces of the support members 3 and 4 which do not make contact with the peripheral edge of the film mirror 2 each preferably have a convex structure or the like in cross-section so as to be used as a handle, from the perspectives of workability and mechanical strength in bonding the peripheral edge of the film mirror 2 and the associated support member using an adhesive.

The material that constitutes the support member is not particularly limited, and specific examples thereof include metal materials such as stainless steel (SUS), aluminum, aluminum alloy, and titanium; resin materials such as carbon fiber-reinforced plastic, polyether ether ketone (PEEK), and polyphenylene sulfide (PPS); and the like.

Among these, the metal materials are preferred from the perspective of joining with the mounting body since the mounting body is often composed of a metal material, and stainless steel or aluminum is more preferred.

The thickness of the support member (t in FIG. 1) is not particularly limited, but from 1 to 10 mm is preferred, and from 2 to 5 mm is more preferred. Note that the "thickness" of the support member refers to the thickness of one support member even when the peripheral edges of both faces of the film mirror are supported using two support members, as illustrated in FIG. 2 (FIGS. 7).

The width of a constituent member (frame member) of the support member (w in FIG. 1) is not particularly limited, but from 10 to 50 mm is preferred, and from 15 to 30 mm is more preferred.

The longitudinal width (long side) of the entire support member (H in FIG. 1) is preferably from 100 to 5000 mm, the lateral width (short side) (W in FIG. 1) is preferably from 100 to 2000 mm, and the ratio of the longitudinal width to the lateral width (longitudinal width/lateral width) is preferably from 1/1 to 10/1.

### [Method for producing reflecting mirror]

The method for producing the reflecting mirror of the present invention is not particularly limited, and examples thereof include a method in which a film mirror is fixed with a desired tension, and then the support member coated with an adhesive or a pressure-sensitive adhesive on its one face is adhered to the peripheral edge of one face of the fixed film mirror, whereafter the fixation of the film mirror is released; a method in which, after the fixation of the film mirror is released in the above method, another support member coated with an adhesive or a pressure-sensitive adhesive on its one face is adhered to the peripheral edge of the other face of the film mirror; and the like.

### EXAMPLES

The present invention will be specifically described below with reference to Examples. However, the present invention is not limited thereto.

### <Example 1>

### (Formation of primer layer)

On a PET substrate (thickness: 25 µm, manufactured by Fujifilm Corporation), a solution containing the acrylic polymer represented by formula (3) was applied by spin-coating to a thickness of 500 nm, and this was dried at 80°C for 5 minutes to produce a coating film.

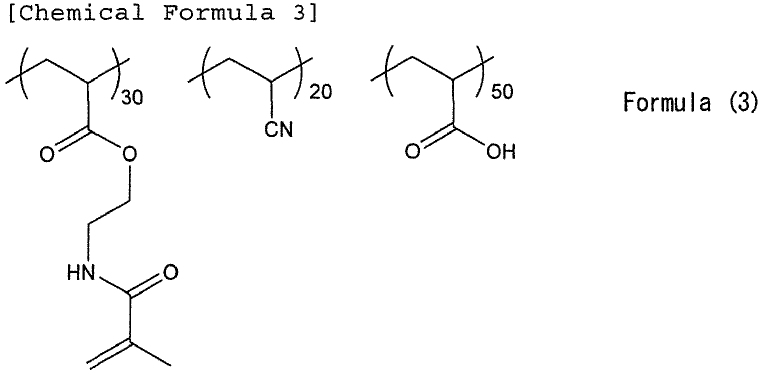

Here, the numeric values in formula (3) represent the proportions (mol%) of the respective units.

The method of synthesizing the acrylic polymer represented by formula (3) is as follows.

One liter of ethyl acetate and 159 g of 2-aminoethanol were introduced into a 2 liter three-necked flask and cooled in an ice bath. To this, 150 g of 2-bromoisobutyryl bromide was added dropwise while adjusting to an internal temperature of not greater than 20°C. Then, the internal temperature was raised to room temperature (25°C), and the mixture was reacted for 2 hours. After the reaction ended, the reaction was quenched by adding 300 mL of distilled water. The ethyl acetate layer was then washed four times with 300 mL of distilled water, dried with magnesium sulfate, and ethyl acetate was distilled off to thereby obtain 80 g of starting material A.

Then, 47.4 g of starting material A, 22 g of pyridine, and 150 mL of ethyl acetate were introduced into a 500 mL three-necked flask and cooled in an ice bath. To this, 25 g of acryloyl chloride was added dropwise while adjusting to an internal temperature of not greater than 20°C. Then, the temperature was raised to room temperature, and the mixture was reacted for 3 hours. After the reaction ended, 300 mL of distilled water was added and the reaction was quenched. The ethyl acetate layer was then washed four times with 300 mL of distilled water, dried with magnesium sulfate, and ethyl acetate was distilled off. The following monomer M1 was purified by column chromatography and obtained in an amount of 20 g.

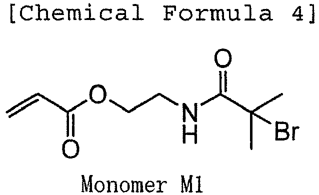

N,N-Dimethylacetamide in an amount of 8 g was introduced into a 500 mL three-necked flask and heated to 65°C under nitrogen flow. To this, 14.3 g of the monomer M1 obtained above, 3.0 g of acrylonitrile (manufactured by Tokyo Chemical Industry Co., Ltd.), 6.5 g of acrylic acid (manufactured by Tokyo Chemical Industry Co., Ltd.), and a solution in which 0.4 g of V-65 (manufactured by Wako Pure Chemical Industries, Ltd.) was dissolved in 8 g of N,N-dimethylacetamide was added dropwise over the course of 4 hours. After dropwise addition was completed, the mixture was stirred for another 3 hours. Then, 41 g of N,N-dimethylacetamide was added, and the reaction solution was cooled to room temperature. To this reaction solution, 0.09 g of 4-hydroxy-TEMPO (manufactured by Tokyo Chemical Industry Co., Ltd.) and 54.8 g of DBU were added, and the solution was reacted at room temperature for 12 hours. Then, 54 g of 70 wt% aqueous solution of methanesulfonic acid was added to the reaction solution. After the reaction ended, reprecipitation was performed with water, the solids were removed, and 12 g of the acrylic polymer represented by formula (3) (weight-average molecular weight: 53,000) was obtained.

The method of preparing a solution containing the acrylic polymer represented by formula (3) is as follows.

The acrylic polymer represented by formula (3) (7 parts by weight), 1-methoxy-2-propanol (74 parts by weight), and water (19 parts by weight) were mixed, and a photopolymerization initiator (Esacure KTO-46, manufactured by Lamberti) (0.35 parts by weight) was added to this mixed solution. The mixture was mixed with stirring and a solution containing the acrylic polymer represented by formula (3) was obtained.

The coating film above was irradiated with light at a wavelength of 254 nm using a UV exposure device manufactured by San-ei Electric Co., Ltd. (model: UVF-502S, lamp: UXM-501MD) with a cumulative exposure of 1000 mJ/cm², thereby forming a primer layer (thickness: 500 nm).

Furthermore, development was performed in order to remove unreacted polymer from the primer layer. Specifically, the PET substrate with the primer layer was immersed in 1 wt% aqueous solution of sodium hydrogen carbonate for 5 minutes, and then washed with pure water.

### (Formation of metallic reflective layer)

Next, the PET substrate with the primer layer was immersed in 1 wt% aqueous solution of silver nitrate aqueous solution for 5 minutes and then washed with pure water to thereby obtain a PET substrate with a primer layer to which an electroless plating catalyst precursor (silver ions) had been provided.

Additionally, the obtained resin substrate with the primer layer was immersed in an alkali aqueous solution (pH 12.5) containing 0.14 wt% NaOH and 0.25 wt% formalin (serving as a reducing agent) for 1 minute and then washed with pure water to thereby obtain a PET substrate with a primer layer to which a reducing metal (silver) had been provided.

Then, the following electroplating process was performed on the primer layer to which the reducing metal (silver) had been provided, and a metal (silver) reflecting layer with a thickness of 100 nm was formed on the primer layer.

DAIN Silver Bright PL-50 (manufactured by Daiwa Fine Chemicals Co., Ltd.) adjusted to a pH of 9.0 using 8M potassium hydroxide was used as the electroplating solution. The PET substrate with the primer layer having a reducing metal on the surface was immersed in the electroplating solution and plated for 15 seconds at 0.5 A/dm², and then washed in flowing pure water for 1 minute.

### (Formation of surface covering layer)

Next, an urethane adhesive (product name: LIS825, LCR901, manufactured by Toyo Ink Co., Ltd) was applied to the metallic reflective layer and dried for 5 minutes to produce an adhesive layer (thickness: 5 µm).

Then, as a surface covering layer, a PMMA substrate (HBS002, thickness: 50 µm, manufactured by Mitsubishi Rayon Co., Ltd.) was adhered to the adhesive layer to produce a film mirror.

Table 1 below shows the size and the thickness of each film mirror produced, the type of resin substrate, the type of reflecting layer, the type of surface covering layer, and the type of each film mirror produced. In Table 1, "□500 mm" in the Size column means 500 mm × 500 mm square. "Single-sided" in the Type column means that the layer structure of the film mirror is according to the above-described first embodiment (FIG. 3), and "Double-sided" means that the layer structure of the film mirror is according to the above-described second embodiment (FIG. 5).

### (Production of reflecting mirror)

After the produced film mirror was fixed, a frame-shaped support member made of aluminum (A5052) (size: 500 mm × 500 mm square, width: 25 mm, thickness: 2 mm) coated with a pressure-sensitive adhesive (FINETAC; manufactured by DIC Corporation) on one face was adhered to produce a reflecting mirror.

The produced reflecting mirror and the mounting body (SUS304) were joined by bolts using two through-holes provided in the support member.

Table 1 shows the size of each support member used, the width (w) and the thickness (t) of each frame member, the material, and the mounting face, as well as the method of bonding a film mirror and a support member and the method of joining a reflecting mirror and a mounting body. In Table 1, "□500 mm" in the Size column means 500 mm × 500 mm square. "Single-sided" in the Mounting face column means an embodiment in which the peripheral edge of one face of the film mirror is supported (FIG. 1), and "Double-sided" means an embodiment in which the peripheral edges of both faces of the film mirror are supported (FIG. 2).

### <Example 2>

A reflecting mirror was produced by the same method as in Example 1 except that the thickness of the PET substrate was changed to 50 µm.

### <Example 3>

A reflecting mirror was produced by the same method as in Example 2 except that the mounting face of the support member was changed to the peripheral edges of both faces of the film mirror.

### <Example 4>

A reflecting mirror was produced by the same method as in Example 3 except that instead of the frame-shaped support member made of aluminum (A5052) (size: 500 mm × 500 mm square, width: 25 mm, thickness: 2 mm), a frame-shaped support member made of stainless steel (SUS304) (size: 500 mm × 500 mm square, width: 25 mm, thickness: 2 mm) was used.

### <Example 5>

A reflecting mirror was produced by the same method as in Example 3 except that a primary layer was not formed and a metallic reflective layer formed by the method described below was used.

### (Formation of metallic reflective layer)

A metallic reflective layer having eight TiO₂ layers and seven SiO₂ layers was formed by alternately forming layers of TiO₂ with a thickness of 65 nm and layers of SiO₂ with a thickness of 110 nm by sputtering (PVD) on a PET substrate (thickness: 25 µm, manufactured by Fujifilm Corporation).

### <Example 6>

The same reflecting mirror as in Example 3 was joined to a mounting body (SUS304) by screws using two through-holes provided in the support member.

### <Example 7>

A film mirror was produced by the same method as in Example 3 except that the pressure-sensitive adhesive (FINETAC; DIC Corporation) used in bonding the film mirror and the support member was replaced with another adhesive (bisphenol F epoxy adhesive, 830-S, manufactured by DIC Corporation).

### <Example 8>

A reflecting mirror was produced by the same method as in Example 3 except that the thickness of the PET substrate was changed to 150 µm.

### <Example 9>

A film mirror was produced by the same method as in Example 3 except that the thickness of the PET substrate was changed to 200 µm.

### <Example 10>

A reflecting mirror was produced by the same method as in Example 3 except that a PET film with a thickness of 250 µm was further adhered with an adhesive (coating thickness: 10 µm, 830-S, manufactured by DIC Corporation) to the film mirror of Example 9 on the PET substrate side.

### <Example 11>

Two film mirrors produced by the same method as in Example 9 were prepared, and a reflecting mirror was produced by adhering the PET substrate faces of the film mirrors to each other using an adhesive (coating thickness: 10 µm, 830-S, manufactured by DIC Corporation).

### <Example 12>

Four PET films with a thickness of 250 µm were adhered using an adhesive (coating thickness: 10 µm, 830-S, manufactured by DIC Corporation) to produce a PET substrate having a thickness of approximately 1 mm.

Then, a reflecting mirror was produced by the same method as in Example 3 except that the film mirror produced by the same method as in Example 9 was adhered on the PET substrate.

### <Comparative Example 1>

Without using a support member, a pressure-sensitive adhesive (FINETAC, manufactured by DIC Corporation) was applied to the film mirror produced in Example 2 on the resin substrate side so as to join the film mirror to a mounting body (SUS304).

Mountability on a mounting body, detachability from the mounting body, specular reflectivity, temperature cycle, light resistance, and scratch resistance of each of the produced reflecting mirrors (of the film mirror in Comparative Example 1; the same applying in the rest) were evaluated by the methods described below, and the results thereof are shown in Table 1.

### <Mountability>

Mountability of each of the produced reflecting mirrors to the mounting body was evaluated according to the following criteria.
A: The time required for mounting was within 3 minutes per mirror, and no surface defects such as wrinkles occurred.
B: The time required for mounting was not less than 3 minutes per mirror, and surface defects such as wrinkles were seen here and there.

### <Detachability>

Detachability of each of the produced reflecting mirrors from the mounting body was evaluated according to the following criteria.
A: The time required for detachment was within 3 minutes per mirror, and no pressure-sensitive adhesive remained.
B: The time required for detachment was not less than 3 minutes per mirror, and after detachment, a remaining pressure-sensitive adhesive was seen here and there.

### <Specular reflectivity (diffuse component ratio)>

The specular reflectivity of each of the produced reflecting mirrors was evaluated by calculating the energy ratio of the diffuse component relative to total reflected light.

Specifically, the reflecting mirror was irradiated with light from a light source LED, the resulting reflected light was allowed to pass through a lens and received as an image by a CCD image sensor, and the proportion of the diffuse component with respect to the total area of the specular reflection component and the diffuse component in the obtained image was calculated.

### <Temperature cycle>

In the temperature cycle of each of the produced reflecting mirrors, each reflecting mirror was left to stand at -40°C for 30 minutes and then at 65°C for 30 minutes repeatedly for 3000 cycles, whereafter wrinkling and undulation of the relevant film mirror and the diffuse component ratio described above were measured, and the temperature cycle was evaluated according to the following criteria.
A: Increase in diffuse component ratio after the test was less than 1%, and planarity problems such as wrinkling, warping, and bending did not occur.
B: Increase in diffuse component ratio after the test was not less than 1% but less than 3%, and planarity problems such as wrinkling, warping, and bending did not occur.
C: Increase in diffuse component ratio after the test was not less than 3% but less than 10%, and wrinkling, warping, bending, and the like were seen here and there.

D: Increase in diffuse component ratio after the test was not less than 10%, and wrinkling, warping, bending, and the like were noticeable.

### <Light resistance>

Each of the produced reflecting mirrors was placed in a xenon lamp light resistance tester (manufactured by Atlas Material Testing Technology, Ci5000, power: 180 W, black panel temperature: 83°C) and left to stand under the conditions of a temperature of 55°C and a relative humidity of 40% for 500 hours. The decrease in reflectance of the film mirror at 450 nm (Reflectance (%) before the test - Reflectance (%) after the test) was measured. For the measurement of reflectance, an ultraviolet visible near-infrared spectrophotometer UV-3100 (manufactured by Shimadzu Corporation) was used. Light resistance was evaluated according to the following criteria.
A: Decrease in reflectance was less than 5%.
B: Decrease in reflectance was not less than 5% but less than 20%.

### <Scratch resistance>

The reflectance (450 nm) of each of the produced film mirrors was measured using a spectrophotometer (UV-3100PC, manufactured by Shimadzu Corporation).

Reflectance (450 nm) after the dust test described below was also measured in the same manner.

Then, decrease in reflectance through the dust test (Initial reflectance - Reflectance after the dust test) was calculated, and scratch resistance was evaluated according to the following criteria.
A: Decrease in reflectance was less than 5%.
B: Decrease in reflectance was not less than 5% but less than 20%.

### (dust test)

The test was performed according to the sand-falling abrasion resistance test of JIS H 8503: 1989.

Specifically, each of produced composite films was cut into a 3 cm square, and after the cut composite film was fixed such that aluminum particles would come into collision at an angle of 45 degrees, 200 g of aluminum particles were allowed to fall freely from a height of 100 cm to collide with the cut composite film.

[Table 1]

**Table 1 (Part 1)**

| | | | Film mirror configuration | | | | Support member configuration | | | | Bonding/joining method | |
|---|---|---|---|---|---|---|---|---|---|---|---|---|
| | L Size | Thickness | Resin substrate | Reflecting layer | Surface covering layer | Type | Size | Width (w) Thickness (t) | Material | Mounting face | Bonding between film mirror and support member | Joining with mounting body |
| EX 1 | □500mm | 50*µ*m | PET (A4300) | Ag | Acrylic resin | Single-sided | □500mm | w=25mm | Aluminum A5052 | Single-sided | Pressure-sensitive adhesive | By bolts |
| | | | | | | | | t=2mm | | | | |
| EX 2 | □500mm | 105*µ*m | PET (A4300) | Ag | Acrylic resin | Single-sided | □500mm | w=25mm | Aluminum A5053 | Single-sided | Pressure-sensitive adhesive | By bolts |
| | | | | | | | | t=2mm | | | | |
| EX 3 | □500mm | 105*µ*m | PET (A4300) | Ag | Acrylic resin | Single-sided | □500mm | w=25mm | Aluminum A5054 | Double-sided | Pressure-sensitive adhesive | By bolts |
| | | | | | | | | t=2mm | | | | |
| EX 4 | □500mm | 105*µ*m | PET (A4300) | Ag | Acrylic resin | Single-sided | □500mm | w=25mm | Stainless steel SUS304 | Double-sided | Pressure-sensitive adhesive | By bolts |
| | | | | | | | | t=2mm | | | | |
| EX 5 | □500mm | 105*µ*m | PET (A4300) | Ti02: 8 layers. Si02: 7 layers | Acrylic resin | Single-sided | □500mm | w=25mm | Aluminum A5054 | Double-sided | Pressure-sensitive adhesive | By bolts |
| | | | | | | | | t=2mm | | | | |
| EX 6 | □500mm | 105 *µ*m | PET (A4300) | Ag | Acrylic resin | Single-sided | □500mm | w=25mm | Aluminum A5054 | Double-sided | Pressure-sensitive adhesive | By screws |
| | | | | | | | | t=2mm | | | | |
| EX 7 | □500mm | 105*µ*m | PET (A4300) | Ag | Acrylic resin | Single-sided | □500mm | w=25mm | Aluminum A5054 | Double-sided | Adhesive | By bolts |
| | | | | | | | | t=2mm | | | | |
| EX 8 | □500mm | 200 *µ*m | PET (A4300) | Ag | Acrylic resin | Single-sided | □500mm | w=25mm | Aluminum A5054 | Double-sided | Pressure-sensitive adhesive | By bolts |
| | | | | | | | | t=2mm | | | | |
| EX 9 | □500mm | 250 *µ*m | PET (A4300) | Ag | Acrylic resin | Single-sided | □500mm | w=25mm | Aluminum A5054 | Double-sided | Pressure-sensitive adhesive | By bolts |
| | | | | | | | | t=2mm | | | | |
| EX 10 | □500mm | 510*µ*m | PET (A4300) | Ag | Acrylic resin | Single-sided | □500mm | w=25mm | Aluminum A5054 | Double-sided | Pressure-sensitive adhesive | By bolts |
| | | | | | | | | t=2mm | | | | |
| EX 11 | □500mm | 510 *µ*m | PET (A4300) | Ag | Acrylic resin | Double-sided | □500mm | w=25mm | Aluminum A5054 | Double-sided | Pressure-sensitive adhesive | By bolts |
| | | | | | | | | t=2mm | | | | |
| EX 12 | □500mm | 1300*µ*m | PET (A4300) | Ag | Acrylic resin | Single-sided | □500mm | w=25mm | Aluminum A5054 | Double-sided | Pressure-sensitive adhesive | By bolts |
| | | | | | | | | t=2mm | | | | |
| CE 1 | □500mm | 110 *µ*m | PET (A4300) | Ag | Acrylic resin | Single-sided | None | | | | - | Pressure-sensitive adhesive |

[Table 2]

**Table 1 (Part 2)**

| | Evaluation result | | | | | |
|---|---|---|---|---|---|---|
| | Mountability | Detachability | Specular reflectivity (diffuse component ratio) | Temperature cycle | Light resistance | Scratch resistance (dust resistance) |
| EX 1 | A | A | 3.6% | D (Warped) | B | B |
| EX 2 | A | A | 2.8% | C (Warped) | B | B |
| EX 3 | A | A | 2.6% | B | B | B |
| EX 4 | A | A | 2.6% | B | B | B |
| EX 5 | A | A | 2.6% | B | B | B |
| EX 6 | A | A | 2.6% | B | B | B |
| EX 7 | A | A | 2.6% | B | B | B |
| EX 8 | A | A | 2.4% | A | B | B |
| EX 9 | A | A | 2.4% | A | B | B |
| EX 10 | A | A | 2.3% | A | B | B |
| EX 11 | A | A | 2.3% | A | A | A |
| EX 12 | A | A | 2.3% | D (Bent) | B | B |
| CE 1 | B | B | 14.3% | C (Warped) | B | B |

From the results shown in Table 1, it was revealed that Comparative Example 1 in which the film mirror was directly joined to the mounting body without using a support member, had good light resistance and scratch resistance, but had poor mountability (constructability) on the mounting body and detachability from the mounting body, and also had low specular reflectivity.

In contrast, it was revealed that when a reflecting mirror produced using a support member was used, mountability on the mounting body and detachability from the mounting body were good while excellent light resistance and scratch resistance were maintained (Examples 1 to 12).

In particular, from a comparison of Example 1 with Example 2 or a comparison of Example 3 with Examples 8 to 10 and 12, it was revealed that when the film thickness of the film mirror was not less than 100 µm, especially from 150 to 1000 µm, light diffusion was suppressed and specular reflectivity was good, and the temperature cycle (heat resistance) was also excellent.

From a comparison of Example 9 with Example 11, it was revealed that light resistance and scratch resistance were improved by approximately two-fold by reversing the reflecting mirror relative to the mounting body.

### REFERENCE SIGNS LIST

- 1: Reflecting mirror
- 2: Film mirror
- 3, 4: Support member
- 10: Film mirror
- 11: Resin substrate
- 12: Metallic reflective layer
- 13: Surface covering layer
- 100: Film mirror
- 101: First surface covering layer
- 102: First metallic reflective layer
- 103: Resin substrate
- 104: Second metallic reflective layer
- 105: Second surface covering layer
- 106: First resin substrate
- 107: Metallic reflective layer
- 108: Second resin substrate

## Claims

1. A reflecting mirror for solar radiation collection, comprising:
a film mirror for solar radiation collection having a polygonal shape and including a resin substrate, a metallic reflective layer and a surface covering layer; and
a support member having a frame shape and adapted to support a peripheral edge of the film mirror.

2. The reflecting mirror for solar radiation collection according to claim 1, wherein the peripheral edge of the film mirror and the support member are bonded by an adhesive or a pressure-sensitive adhesive.

3. The reflecting mirror for solar radiation collection according to claim 1 or 2, wherein a bonding region where the peripheral edge of the film mirror and the support member are bonded has at least two through-holes utilized in joining with a mounting body.

4. The reflecting mirror for solar radiation collection according to any one of claims 1 to 3, wherein the film mirror has a film thickness of not less than 100 µm.

5. The reflecting mirror for solar radiation collection according to any one of claims 1 to 4, wherein the film mirror has a film thickness of not less than 150 µm but not greater than 1000 µm.

6. The reflecting mirror for solar radiation collection according to any one of claims 1 to 5, wherein the film mirror has a rectangular shape.

7. The reflecting mirror for solar radiation collection according to any one of claims 1 to 6, wherein the film mirror has a first surface covering layer, a first metallic reflective layer, a resin substrate, a second metallic reflective layer and a second surface covering layer in this order.

8. The reflecting mirror for solar radiation collection according to any one of claims 1 to 6, wherein the film mirror has a first surface covering layer, a first resin substrate, a metallic reflective layer, a second resin substrate and a second surface covering layer in this order.
